# EUROPEAN PATENT SPECIFICATION

(11) **EP 0 477 989 B1**
(45) Date of publication and mention of the grant of the patent: **11.06.1997**
(21) Application number: 91116697.3
(22) Date of filing: 30.09.1991
(51) Int. Cl.: G06F 13/16, G06F 15/16

(54) **Control processor for memory bus configuration**
Steuerprozessor für Speicherbuskonfiguration
Processeur de commande pour configuration de bus de mémoire

(30) Priority: 28.09.1990 JP 260891/90
(43) Date of publication of application: 01.04.1992
(73) Proprietor: MATSUSHITA ELECTRIC INDUSTRIAL CO., LTD., Kadoma-shi, Osaka-fu, 571 (JP)
(72) Inventor: Nakai, Seiji, Osaka-shi, Osaka-fu (JP); Kubota, Masashi, Kobe-shi, Hyogo-ken (JP)
(74) Representative: Eisenführ, Speiser & Partner

(56) References cited:
- EP-A- 0 228 949
- EP-A- 0 249 720
- WO-A-87/04826
- DE-A- 3 340 123
- US-A- 4 164 787

## Description

### BACKGROUND OF THE INVENTION

### 1. Field of the Invention

The present invention relates to a control processor for memory bus configuration which multiplexes and demultiplexes data on the memory buses by which the plural processor elements in a parallel computer, which digitally processes video signals and/or audio signals, transfers data to line memory, field memory or other memory device.

### 2. Description of the Prior Art

Parallel computers (particularly multiple processor parallel computers) have been used to distribute to plural processor elements the processing operations required for real-time digital processing of video and/or audio signals. The processor elements are connected to memory via a memory bus because these signal processing operations require the data to be delayed for a specific period, typically by using the line or field memory. The memory bus connects each processor element to a single memory unit in a 1:1 configuration. By thus preventing plural processor elements from transferring data to a single memory unit, data collisions are prevented and the specific delay period required for a given signal is not disturbed during the processing of that signal.

DE-A-33 40 123 defining the closest prior art from which the invention proceeds discloses a control processor inserted between a plurality of processor elements for controlling memory bus configuration, wherein the known control processor comprises a multiplexing unit for converting data to multiplexed data by a multiplexing process, and a demultiplexing unit for converting the multiplexed data to demultiplexed data by a demultiplexing process, wherein the multiplexing unit and the demultiplexing unit are controlled for controlling the transfer of multiplexing format data to the multiplexing unit and demultiplexing format data to the demultiplexing unit.

From US-A-4 164 787, it is known an apparatus for providing a communication arrangement between two or more independently operable microprocessor units. Large amounts of data or data in block format are capable of being passed between the microprocessor units via an intercommunication channel with little handshaking between the mircroprocessor units. In the known arrangement, a plurality of microprocessor units sequentially access, under control of a synchronous clock, a common memory for random access to blocks of memory for writing data therein and for reading data previously written therein without the necessity for contention resolving means.

WO-A-8704826 describes a multi-processor apparatus which includes an array of separately addressable memory units and an array of separately addressable processors. A first unidirectional bus delivers data from a selected processor to a selected memory unit. A second unidirectional data bus delivers data from a selected memory unit to a selected processor. Arbitor circuits control the flow of data to these data buses.

A further known device of the above-mentioned configuration is described e.g., in "A *Real-Time Video Signal Processing System"* (paper D-201, National Spring Conference of the Japan *Denshin Gakkai* (Telecommunications Society)) in which it is so described that a memory device is directly connected to each of the processor elements comprising the multiple processor computer for data transfer.

However, when delay control is required by one of the processor elements in this conventional configuration, two memory buses are required to connect that processor element and one memory. Therefore, when various delay control sequences are required by plural processor elements for video signal processing as in a high definition television, many memory devices and a correspondingly high multiple of memory buses are required.

### SUMMARY OF THE INVENTION

Therefore, an object of the present invention is to reduce the required number of memory buses by multiplexing the data transferred from the plural processor elements to the memory in a parallel computer used for digital signal processing.

To achieve this object, according to the present invention, there is provided a control processor inserted between a plurality of processor elements, each having a first bus and a second bus, and a memory having a first memory bus and a second memory bus, for controlling memory bus configuration, said control processor comprising:
a multiplexing unit connected to the second buses of plurality of processor elements and to the first memory bus of the memory and for converting data on the second buses to multiplexed data by a multiplexing process for transfer to the first memory bus;
a demultiplexing unit connected to the first buses of plurality of processor elements and to the second memory bus of the memory and for converting the multiplexed data on the second memory bus to demultiplexed data by a demultiplexing process for transfer to the first buses; and
a program control unit connected to the multiplexing unit and the demultiplexing unit and for controlling the transfer of multiplexing format data to the multiplexing unit and demultiplexing format data to the demultiplexing unit by execution of a control program;
characterized in that
said first buses are input buses, said second buses are output buses, said first memory bus is a memory input bus, and said second memory bus is a memory output bus;
a dynamic allocation control unit is provided for generating an allocation signal from a counted value of a synchronization signal and a clock signal; and
said program control unit is a program control unit with dynamic allocation which is further connected to the dynamic allocation control unit to change the multiplexing format data transferred to the multiplexing unit and the demultiplexing format data transferred to the demultiplexing unit by means of the allocation signal input from the dynamic allocation control unit.

Since, according to the present invention, the control processor for memory bus configuration as described above combines and multiplexes the data on the output buses of plural processor elements to one memory bus, a plural to one connection of output buses to memory buses and input buses to memory buses is possible, and the total number of memory buses can therefore be reduced. Thus, because the limitations imposed on large-scale integration of a parallel computer by the increased number of pins are possible to create a single-chip LSI parallel computer for incorporation in televisions, VCRs, and other mass-produced electronics.

### BRIEF DESCRIPTION OF THE DRAWINGS

The present invention will become more fully understood from the detailed description given below and the accompanying diagrams wherein:
Fig. 1 is a block diagram of a control processor for memory bus configuration according to a preferred embodiment of the present invention,
Figs. 2, and 3 are block diagrams of the multiplexing unit, and demultiplexing unit, respectively, of the control processor for memory bus configuration according to the preferred embodiment,
Figs. 4 and 5 are block diagrams of the dynamic allocation control unit and the program control unit with dynamic allocation, respectively, of the control processor for memory bus configuration according to the preferred embodiment,
Fig. 6 is a timing chart used to describe the multiplexing/demultiplexing sequence of the preferred embodiment,
Figs. 7a and 7b are diagrams used to describe the multiplexing operation of the preferred embodiment, and
Figs. 8a and 8b are diagrams used to describe the demultiplexing operation of the preferred embodiment.

### DESCRIPTION OF PREFERRED EMBODIMENTS

A preferred embodiment of a control processor for memory bus configuration according to the present invention is described hereinbelow with reference to the accompanying figures.

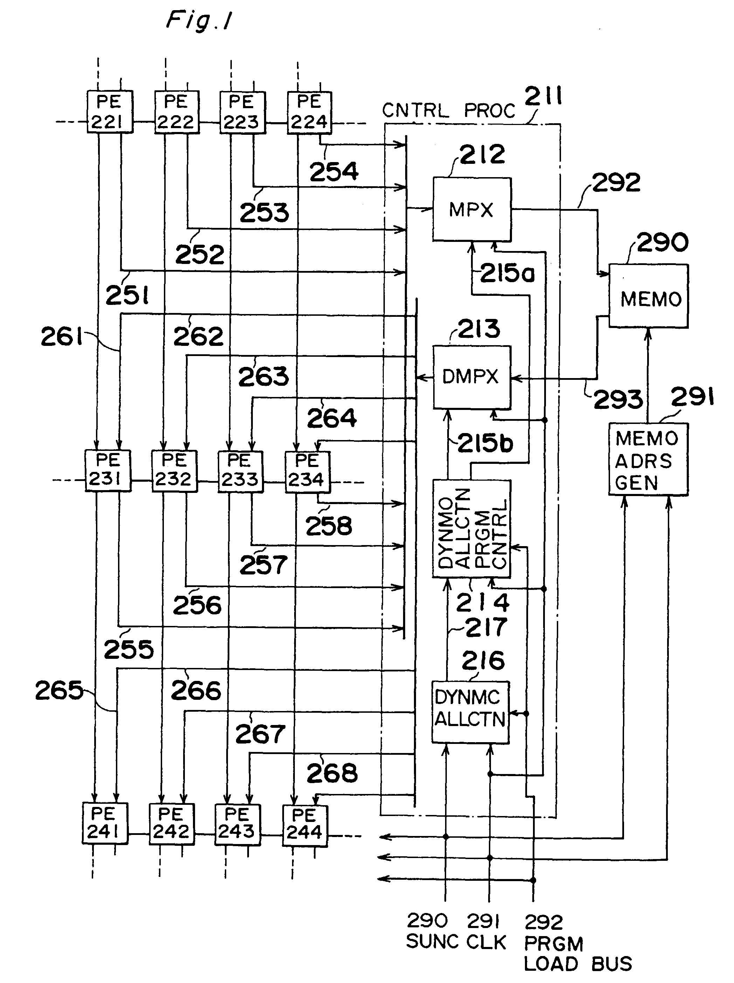

Fig. 1 is a block diagram of a control processor for memory bus configuration according to a preferred embodiment of the invention comprising a memory bus configuration control processor 211, processor elements 221-224, 231-234, and 241-244, a memory 290, and memory address generator 291.

The memory bus configuration control processor 211 comprises a multiplexing unit 212, demultiplexing unit 213, and program control unit 214. As controlled by the program control unit 214, the multiplexing unit 212 multiplexes the data on the specific output buses selected from among plural processor element output buses 251-258, and transfers the data to a memory input bus 292 of the memory 290. At the same time, the demultiplexing unit 213 demultiplexes the multiplexed data on a memory output bus 293 of the memory 290, and outputs the demultiplexed data to the specific input buses selected from among plural processor element input buses 261-268. During this operation the memory 290 controls the data delay period by simultaneously reading and writing data to sequential addresses generated by the memory address generator 291 to loop for a constant delay period.

It is to be noted that the present embodiment is described with the memory bus configuration control processor 11 connected to eight output buses and eight input buses, but any number of buses may be used and the invention is not limited to an eight bus configuration.

Furthermore, a dynamic allocation control unit 216 is provided in the memory bus configuration control processor 211 to generate a allocation signal for dynamic allocation of data multiplexing combinations. The program control unit 214 has dynamic allocation, which enables the multiplexing and demultiplexing formats to be set dynamically in the multiplexing unit 212 and the demultiplexing unit 213 by the allocation signal.

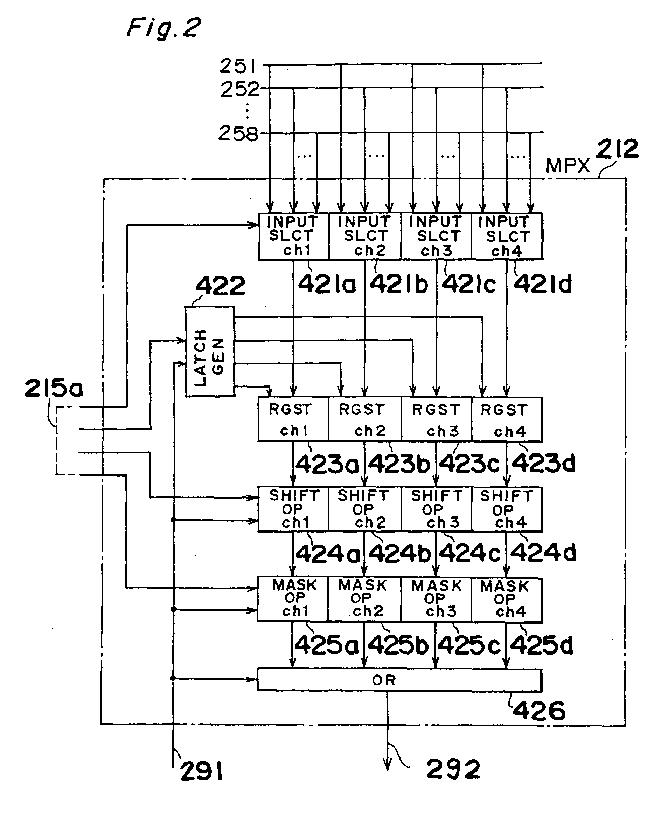

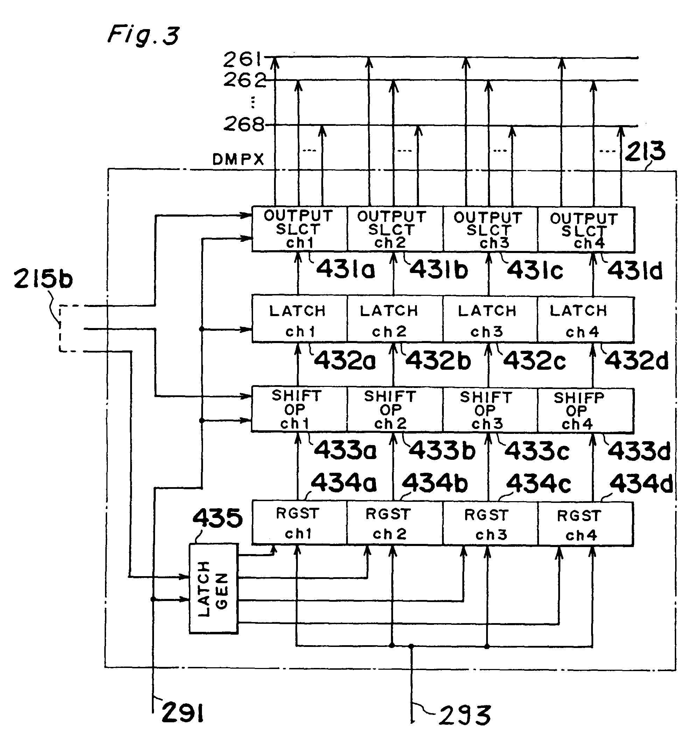

Figs. 2, and 3 are block diagrams of the multiplexing unit 212, and the demultiplexing unit 213, respectively, which are employed in the memory bus configuration control processor 211.

As shown in Fig. 2, from among the eight output buses 251-258, the multiplexing unit 12 stores the data on the four (or fewer) output buses selected by the input selectors 421a-421d to the registers 423a-423d addressed by the latch signal generated from the latch signal generator 422. These four registers 423a-423d can each be separately set to latch the data, i.e., can be separately enabled/disabled. Next, the data in these four (or fewer) registers are multiplexed by combining the operations of the shift operation units 424a-424d, mask operation units 425a-425d, and the OR operation unit 426, and is then transferred to the memory input bus 292. Pipeline processing is enabled since the operation of the latch signal generator 422, shift operation units 424a-424d, the mask operation units 425a-425d, and the OR operation unit 426 are all synchronized to a clock signal 291. In addition, by the control signal on data bus 215a from the program control unit 214, the buses selected at input selectors 421a-421d, the latch enable/disable signal to be applied to registers 423a-423d, shift amount to be effected in shift operation units 424a-424d, and mask position settings for mask operation units 425a-425d are controlled.

Referring to Fig. 3, the demultiplexing unit 213 stores the data on the memory output bus 293 to the registers 434a-434d according to the latch signal from the latch signal generator 435. These four registers can each be separately set to latch the data, i.e., can be separately enabled/disabled. Also, the four registers can either store the same data or, can store different data by shifting the latch timing therefor. Next, the data in these four (or fewer) registers 434a-434d are shifted by the shift operation units 433a-433d to latch circuits 432a-432d. After matching the output timing by the latch circuits 432a-432d, the data are outputted to the four (or fewer) input buses selected by the output selectors 431a-431d from among the eight available input buses 261-268. Pipeline processing is enabled by synchronizing the operation of the latch signal generator 435, shift operation units 433a-433d, latch circuits 432a-432d, and output selectors 431a-431d to the clock signal 291. In addition, the latch enable/disable state, shift amount, and selection of input buses are controlled by the data signal 215b from the program control unit 214.

It is to be noted that the present embodiment is described as controlling the selection of four output buses and four input buses, but any number of buses may be used and the invention is not limited to only four buses.

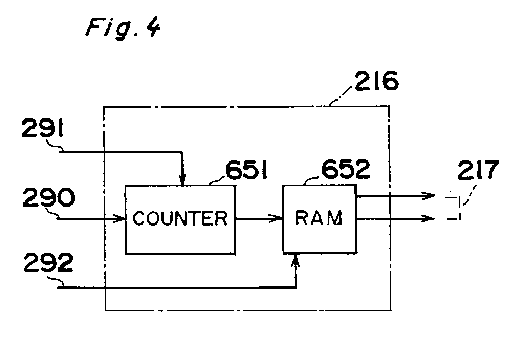

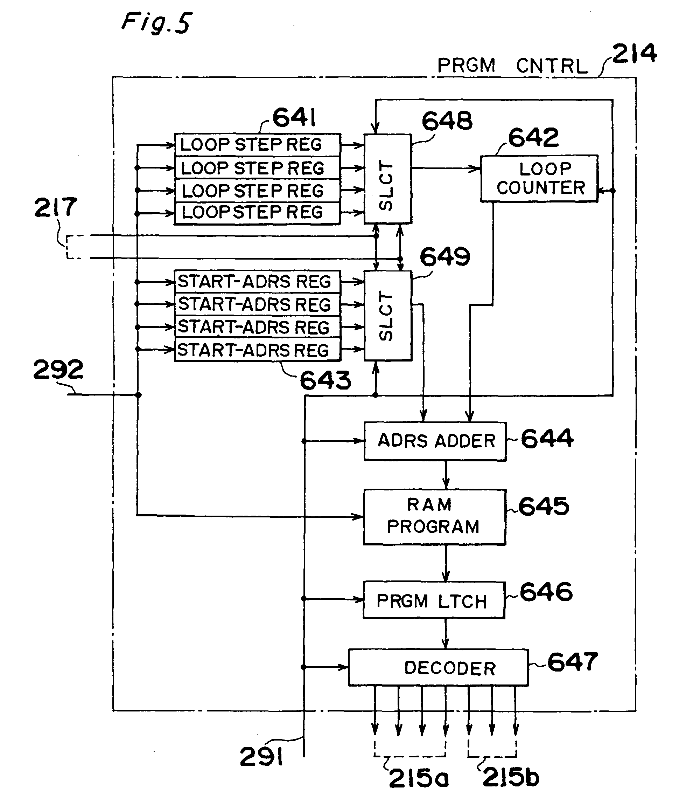

Figs. 4 and 5 are block diagrams of the dynamic allocation control unit 216 and the program control unit with dynamic allocation 214, respectively, in the memory bus configuration control processor 211.

Referring to Fig. 4, data used to output different allocation signals 217 according to the video signal processing procedure (e.g., during display periods and during the fly-back period) are input to the dynamic allocation control unit 216 from an external source by means of the program load bus 292 and stored to RAM 652. By inputting to the RAM 652 a value counted by a counter 651 that counts the synchronization signal 290 and the clock signal 291, the allocation signal 217 can be changed for output to the program control unit with dynamic allocation 214.

Referring to Fig. 5, the program control unit with dynamic allocation 214 stores to the program RAM 645 the multiplexing and demultiplexing formats which differ according to the video signal processing procedure, stores to the four start-address registers 643 the values of the starting address from which to fetch commands from the program RAM according to the different video signal processing procedures, and stores to the four loop step registers 641 the number of program steps to be executed in a loop according to the different video signal processing procedures; each of these stored values is loaded from an external source via the program load bus 292.

The loop counter 642 is incremented by the clock signal 291, and by clearing the count when the count becomes the same as one of the numbers of program steps stored in the loop step register 641 selected by the selector 648 according to the allocation signal 217, the clock signal count is repeated and the counted value is outputted as the loop address value. The command address, which is the sum obtained from the loop address value and the one start-address value selected by the selector 649 according to the allocation signal 217 added by the address adder 644, is then input to the program RAM 645 to fetch the command for one step from within the looped range of the program according to the differing video signal processing procedures, which is then latched by the program latch circuit 646. Immediately thereafter the command is decoded by the decoder 647, and the multiplexing unit and demultiplexing unit are thus set by the data signals 215a and 215b. Pipeline processing is enabled by synchronizing the operation of the loop counter 642, address adder 644, program latch circuit 646, decoder 647, selector 648, and selector 649 to the clock signal 291.

It is to be noted that the present embodiment is described with dynamically allocated selection from four start-address registers and four loop step registers, but any number of registers may be used and the invention is not limited to only four.

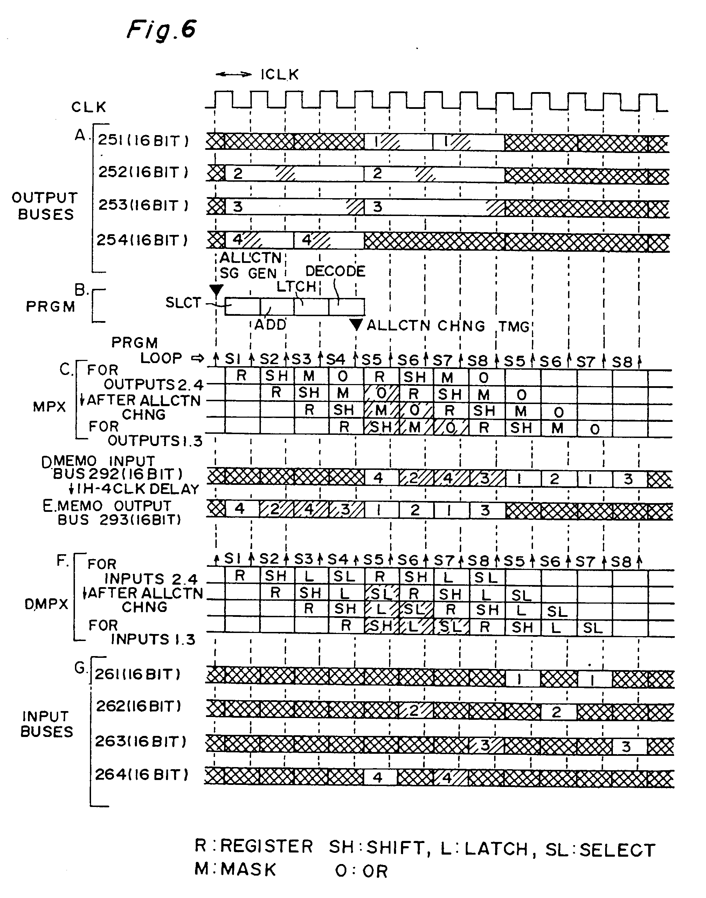

Fig. 6 is a timing chart of the multiplexing/demultiplexing sequence. The clock signal, which is the reference signal for the sequence, is phase synchronized to the horizontal synchronization signal of the synchronization signal. One cycle (= 1 horizontal line) of the horizontal synchronization signal is hereinafter referred to as 1H, and one cycle of the clock signal as 1CLK. Fig. 6, block A shows, by way of example, the multiplexing/demultiplexing sequence for which the same delay (e.g., 1H) is required for data 1 through data 4 outputted to the output buses 251-254 of the processor elements. For these four output buses the transfer rate is 1/2 rate (2CLK) for data 1 and data 4, and 1/4 rate (4CLK) for data 2 and data 3. The effective data bit width for all four data is 16 bits of the 16-bit data width. The transfer rate of the memory bus is 1 rate (1CLK), and the bit width is 16 bits.

Dynamic allocation program control changes the allocation according to the sequence shown in Fig. 6, block B to change the range looped through in the program. In this example the four step loop is changed from (S1-S4) to (S5-S8). Thus, the multiplexing/demultiplexing format before and after the allocation change is switched. It is to be noted that the blocks marked by slash lines in the figure are those made invalid by the allocation change.

The multiplexing sequence is shown in Fig. 6, block C. The multiplexing combinations are data 2 through data 4 when data 1 is not outputted, and is changed to data 1 through data 3 by changing the allocation when data 1 is outputted and output of data 4 stops. As a result of time-division multiplexing of this combination, the data transferred to the memory input bus 292 is as shown in Fig. 6, block D.

The demultiplexing sequence is shown in Fig. 6, block F. The multiplexed data (shown in Fig. 6, block E) delayed 1H-4CLK by the memory and sequentially outputted to the memory output bus 293 is latched each cycle for time-division demultiplexing. As a result, the data transferred to the four input buses 261, 262, 263, and 264 becomes as shown in Fig. 6, block G.

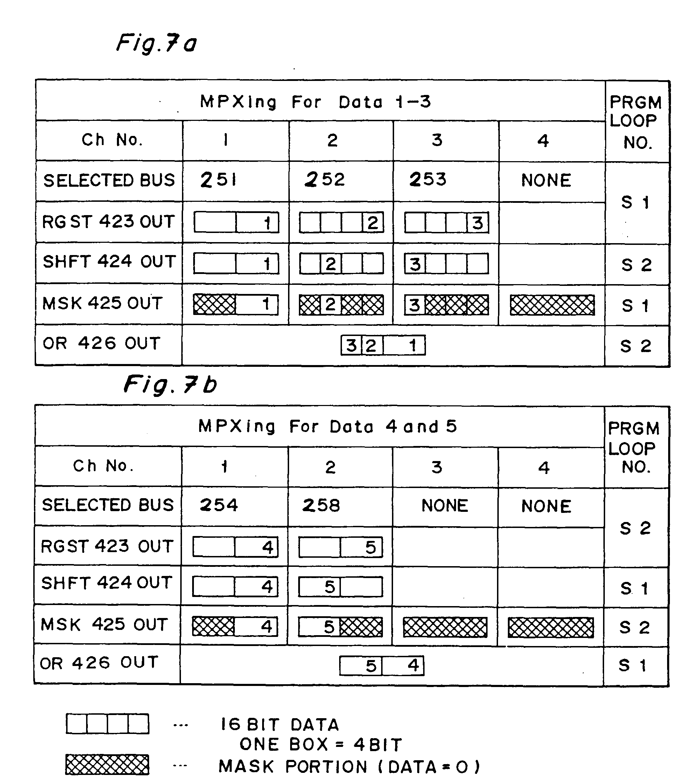

The contents of the multiplexing unit 212 being processed at this time are shown in Figs. 7a and 7b. As shown in Fig. 7a, in the multiplexing process for data 1-3, the operations in the input selectors 421a-421c and registers 423a-423c are first carried out in step 1 (S1). Then, bit multiplexing is applied by sequential operation of the shift operation units 424a-424c, mask operation units 425a-425c, and the OR operation unit 426. As shown in Fig. 7b, in the multiplexing process for data 4 and 5, first, the operations in the input selector 421a-421b and register 423a-423b are carried out in step 2 (S2). Then, bit multiplexing is applied by sequential operation of the shift operation units 424a-424b, mask operation units 425a-425b, and the OR operation unit 426. In addition, because these two bit-multiplexed data are outputted at different clock cycles, time-division multiplexing is applied and transfer of the multiplexed data is possible.

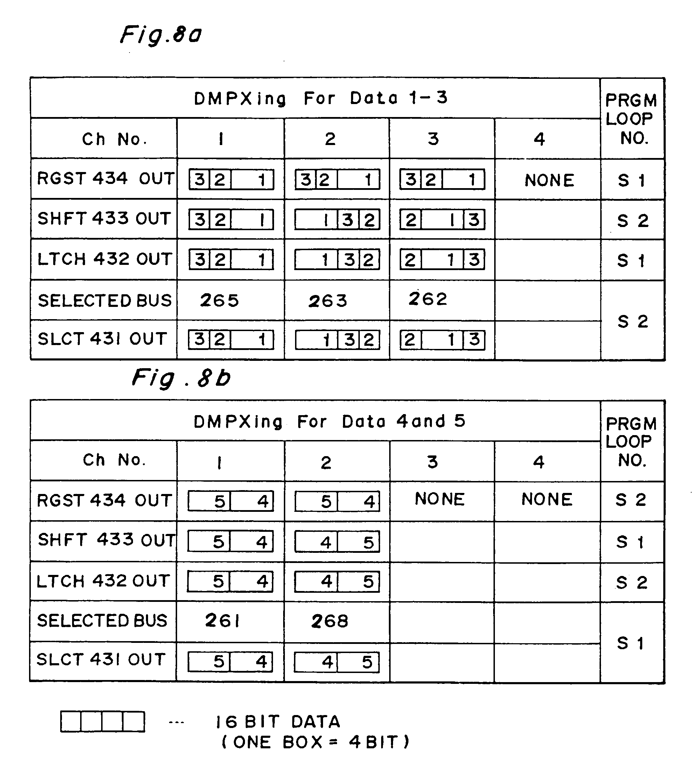

The contents of the demultiplexing process performed by the demultiplexing unit213 are shown in Figs. 8a and 8b. As shown in Fig. 8a, in the demultiplexing process applied to data 1-3, the data is processed by registers 434a-434c at step 1 (S1), after which it is demultiplexed by sequential operation of the shift operation units 433a-433c, latch circuits 432a-432c, and output selectors 431a-431c. As shown in Fig. 8b, in the demultiplexing of data 4 and 5, the data is processed by registers 434a-434b at step 2 (S2), after which it is demultiplexed by sequential operation of the shift operation units 424a-424b, latch circuits 432a-432b, and output selectors 431a-431b. While bit demultiplexing is not applied here, the bit position is moved and it is therefore possible to transfer the demultiplexed data to the input bus of each processor element.

Thus, a control processor for memory bus configuration according to the present embodiment can reduce the number of memory buses and make possible a single-chip LSI parallel computer by dynamic allocation of data combinations for data multiplexing control when the combinations of multiplexing data outputted to the processor element output buses differ according to the video signal processing procedure (e.g., processing during display periods and processing during the fly-back period).

## Claims

1. A control processor inserted between a plurality of processor elements (221-224, 231-234), each having a first bus (261-268) and a second bus (251-258), and a memory (290) having a first memory bus (292) and a second memory bus (293), for controlling memory bus configuration, said control processor (211) comprising:
a multiplexing unit (212) connected to the second buses (251-258) of plurality of processor elements and to the first memory bus (292) of the memory and for converting data on the second buses (251-258) to multiplexed data by a multiplexing process for transfer to the first memory bus (292);
a demultiplexing unit (213) connected to the first buses (261-268) of plurality of processor elements and to the second memory bus (293) of the memory (290) and for converting the multiplexed data on the second memory bus (293) to demultiplexed data by a demultiplexing process for transfer to the first buses (261-268); and
a program control unit (214) connected to the multiplexing unit (212) and the demultiplexing unit (213) and for controlling the transfer of multiplexing format data to the multiplexing unit (212) and demultiplexing format data to the demultiplexing unit (213) by execution of a control program;
characterized in that
said first buses are input buses (261-268), said second buses are output buses (251-258), said first memory bus is a memory input bus (292), and said second memory bus is a memory output bus (293);
a dynamic allocation control unit (216) is provided for generating an allocation signal from a counted value of a synchronization signal and a clock signal; and
said program control unit (214) is a program control unit with dynamic allocation which is further connected to the dynamic allocation control unit (216) to change the multiplexing format data transferred to the multiplexing unit (212) and the demultiplexing format data transferred to the demultiplexing unit (213) by means of the allocation signal input from the dynamic allocation control unit (216).

2. The control processor according to Claim 1, wherein the dynamic allocation control unit (216) comprises:
a counter (651) for counting the synchronization signal and the clock signal, and for outputting the counted value;
a program load bus (292) for inputting the program from an external source; and
a RAM (652) connected to the counter (651) and program load bus (292) for storing data input from the program load bus (292) with related synchronization timing and dynamic allocation signal generating timing, and outputting the dynamic allocation signal by means of the count value input from the counter (651).

3. The control processor according to Claim 1, wherein the program control unit (214) with dynamic allocation comprises:
a program load bus (292) to input the program and program control data from an external source;
a plurality of start-address registers (643) connected to the program load bus (292) for storing plural start-address values input as the starting address for command execution;
a start-address selector (649) connected to the plural start-address registers (643) and to the dynamic allocation control unit (216) for selecting and outputting one start-address value from the plural start-address values according to the allocation signal;
a plurality of loop-step registers (641) connected to the program load bus (292) for storing the plural numbers of program steps input as the number of commands to be executed in a loop in the program;
a loop-step selector (648) connected to the plural loop-step registers (641) and to the dynamic allocation control unit (216) for selecting and outputting one number of program steps from among the plural numbers of program steps according to the allocation signal;
a loop counter (642) connected to the loop-step selector (648) for counting repeatedly a clock signal by clearing the counted value each time the counted number of clock signals becomes the same as the input number of program steps, and for outputting the counted value as the loop address;
an address adder (644) connected to the start-address selector (649) and loop counter (642) for adding the start-address value and the loop address value, and for outputting the result as the command address,
a program RAM (645) connected to the address adder (644) and the program load bus (292) for storing the program input from the program load bus (292) and fetched commands by the command address input from the address adder (644);
a program latch circuit (646) connected to the program RAM (645) to latch the command output; and
a decoder (647) connected to the program latch circuit (646) for decoding commands, transferring multiplexing format data to the multiplexing unit (212), and transferring demultiplexing format data to the demultiplexing unit (213).

4. The control processor according to anyone of the Claims 1 to 3, wherein said multiplexing unit (212) comprises:
a plurality of input selectors (421) connected to the output buses (251-258) of plural processor elements (212-224,231-234) to select output buses according to multiplexing format data from the program control unit (214);
a plurality of registers (423) connected discretely to the plurality of input selectors (421) for storing the data on the selected output bus at a discrete latch timing;
a plurality of shift operation units (424) connected discretely to the plural registers (423) to shift the stored data according to the multiplexing format data from the program control unit (214);
a plurality of mask operation units (425) connected discretely to the plural shift operation units (424) for masking the output data from the shift operation units (424) according to the multiplexing format data from the program control unit (214);
an OR operation unit (426) connected to the plural mask operation units (425) for applying an OR operation to the output data from the mask operation units (425) and for outputting the result to the memory input bus (292) of the memory (290); and
a latch signal generator (422) connected to the plural registers (423) for generating and outputting a latch timing signal according to the multiplexing format data from the program control unit (214),
whereby a time-division multiplexing, a bit multiplexing, or a multiplexing which is a combination of these is applied to the data on the output buses (251-258).

5. The control processor according to anyone of the Claims 1 to 4, wherein said demultiplexing unit (213) comprising:
a plurality of registers (434) connected to the memory output bus (293) of the memory (290) for storing the data on the memory output bus (293) at a discrete latch timing;
a plurality of shift operation units (433) connected discretely to the plural registers (434) for shifting the stored data according to the demultiplexing format data from the program control unit (214);
a plurality of latch circuits (432) connected discretely to the plural shift operation units (433) for matching the output timing of the shift operation unit output data;
a plurality of output selectors (431) connected to the plural latch circuits (432) for selecting as the output destination of the latch circuit (432) the input bus selected from the input buses (261-268) of plural processor elements (221-224,231-234); and
a latch signal generator (435) connected to the plural registers (434) for generating and outputting a latch timing signal according to the demultiplexing format data from the program control unit (214),
whereby a time-division demultiplexing, a bit demultiplexing, or a demultiplexing which is a combination of these is applied to the data on the memory output bus (293).

## Patentansprüche

1. Steuerungsprozessor, welcher zwischen mehreren Prozessorelementen (221-224, 231-234) eingefügt ist, wobei jedes einen ersten Bus (261-268) und einen zweiten Bus (251-258) und einen Speicher (290) mit einem ersten Speicherbus (292) und einem zweiten Speicherbus (293) aufweist, zum Steuern der Speicherbuskonfiguration, wobei der Steuerungsprozessor (211) umfaßt:
Eine Multiplexeinheit (212), welche an die zweiten Busse (251-258) mehrerer Prozessorelemente und an die ersten Speicherbusse (292) des Speichers und zum Konvertieren von Daten auf den zweiten Bussen (251-258) in gemultiplexte Daten durch einen Multiplexoperation zum Übertragen zu dem ersten Speicherbus (292) angeschlossen ist;
eine Demultiplex-Einheit (213), welche an die ersten Busse (261-268) mehrerer Prozessorelemente und an den zweiten Speicherbus (293) des Speichers (290) und zum Konvertieren der gemultiplexten Daten auf dem zweiten Speicherbus (293) in demultiplexte Daten durch einen Demultiplex-Operation zum Übertragen zu den ersten Bussen (261-268) angeschlossen ist; und
eine Programmsteuerungseinheit (214), welche an die Multiplexeinheit (212) und Demultiplex-Einheit (213) und zum Steuern der Übertragung der Multiplex-Format-Daten zu der Multiplexeinheit (212) und der Demultiplex-Format-Daten zu der Demultiplex-Einheit (213) durch Ausführen eines Steuerungsprogramms angeschlossen ist;
dadurch gekennzeichnet, daß
die ersten Busse Eingangsbusse (261-268) sind, die zweiten Busse Ausgangsbusse (251-258) sind, der erste Speicherbus ein Speichereingangsbus (292) ist und der zweite Speicherbus ein Speicherausgangsbus (293) ist;
eine dynamische Belegungssteuerungseinheit (216) zum Erzeugen eines Belegungssignals aus einem gezählten Wert eines Synchronisationssignals und eines Taktsignals vorgesehen ist; und
die Programmsteuerungseinheit (214) eine Programmsteuerungseinheit mitdynamischer Belegung ist, welche weiterhin an die dynamische Belegungssteuerungseinheit (216) angeschlossen ist zum Ändern der zu der Multiplexeinheit (212) übertragenen Multiplex-Format-Daten und der zu der Demultiplex-Einheit (213) übertragenen Demultiplex-Format-Daten durch die Belegungssignaleingabe von der dynamischen Belegungssteuerungseinheit (216).

2. Steuerungsprozessor nach Anspruch 1, bei welchem die dynamische Belegungssteuerungseinheit (216) umfaßt:
Einen Zähler (651) zum Zählen des Synchronisationssignals und des Taktsignals und zum Ausgeben des gezählten Wertes;
einen Programmladebus (292) zum Eingeben des Programms von einer externen Quelle; und
ein RAM (652), welches an den Zähler (651) und den Programmladebus (292) angeschlossen ist, zum Speichern von Daten, welche von dem Programmladebus (292) eingegeben werden, mit dazugehörender Synchronisations-Zeitsteuerung und dynamischer Belegungssignalerzeugungs-Zeitsteuerung und zum Ausgeben des dynamischen Belegungssignals durch den von dem Zähler (651) eingegebenen Zählwert.

3. Steuerungsprozessor nach Anspruch 1, bei welchem die Programmsteuerungseinheit (214) mit dynamischer Belegung umfaßt:
Einen Programmladebus (292) zum Eingeben des Programms und von Programmsteuerungsdaten von einer externen Quelle;
mehrere Anfangsadressen-Register (643), welche an den Programmladebus (292) angeschlossen sind, zum Speichern mehrerer Anfangsadreßwerte, die als Anfangsadresse für die Befehlsausführung eingegeben werden;
einen Anfangsadressenselektor (649), welcher an die Anfangsadressenregister (643) und die dynamische Belegungs-Steuerungseinheit (216) angeschlossen ist, zum Selektieren und Ausgeben eines Anfangsadreßwertes aus den Anfangsadreßwerten entsprechend dem Belegungssignal;
mehrere Schleifenschritt-Register (641), welche an den Programmladebus (292) angeschlossen sind, zum Speichern der Anzahlen der eingegebenen Programmschritte als Anzahl der in einer Schleife in dem Programm auszuführenden Befehle; einen Schleifenschritt-Selektor (648), welcher an die Schleifenschritt-Register (641) und die dynamische Belegungs-Steuerungseinheit (216) angeschlossen ist, zum Selektieren und Ausgeben einer Anzahl von Programmschritten aus mehreren Anzahlen von Programmschritten entsprechend dem Belegungssignal;
einem Schleifenzähler (642), welcher an den Schleifenschritt-Selektor (648) angeschlossen ist, zum wiederholten Zählen eines Taktsignals durch Löschen des gezählten Wertes jedes Mal, wenn die gezählte Anzahl der Taktsignale die gleiche wie die eingegebene Anzahl der Programmschritte wird, und zum Ausgeben des gezählten Wertes als die Schleifenadresse;
einen Adreßaddierer (644), welcher an den Anfangsadreß-Selektor (649) und den Schleifenzähler (642) angeschlossen ist, zum Addieren des Anfangsadreßwertes und des Schleifenadreßwertes und zum Ausgeben des Ergebnisses als die Befehlsadresse,
einen Programm-RAM (645), welcher an den Adreßaddierer (644) und den Programmladebus (292) angeschlossen ist, zum Speichern des von dem Programmladebus (292) eingegebenen Programms und von abgerufenen Befehlen durch die Befehlsadreßeingabe von dem Adreßaddierer (644);
eine Programmzwischenspeicherschaltung (646), welche an den Programm-RAM (645) angeschlossen ist, zum Zwischenspeichern der Befehlsausgabe; und
einen Dekodierer (647), welcher an die Programm-Zwischenspeicherschaltung (646) angeschlossen ist, zum Dekodieren von Befehlen, Übertragen von Multiplex-Format-Daten zu der Multiplex-Einheit (212) und Übertragen von Demultiplex-Format-Daten zu der Demultiplex-Einheit (213).

4. Steuerungsprozessor nach einem der Ansprüche 1 bis 3, bei welchem die Multiplex-Einheit (212) umfaßt:
Mehrere Eingangsselektoren (421), welche an die Ausgangsbusse (251-258) mehrerer Prozessorelemente (212-224, 231-234) zum Selektieren von Ausgangsbussen entsprechend Multiplex-Format-Daten von der Programmsteuerungseinheit (214) angeschlossen sind;
mehrere Register (423), welche diskret an die Eingangsselektoren (421) angeschlossen sind, zum Speichern der Daten auf dem selektierten Ausgangsbus mit einer diskreten Zwischenspeicher-Zeitsteuerung;
mehrere Verschiebeoperations-Einheiten (424), welche diskret an die Register (423) angeschlossen sind, zum Verschieben der gespeicherten Daten entsprechend den Multiplex-Format-Daten von der Programmsteuerungseinheit (214);
mehrere Maskenoperations-Einheiten (425), welche diskret an die Verschiebeoperations-Einheiten (424) angeschlossen sind, zum Maskieren der Ausgangsdaten von den Verschiebeoperations-Einheiten (424) entsprechend den Multiplex-Format-Daten von der Programmsteuerungseinheit (214);
eine OR-Verknüpfungseinheit (426), welche an die Maskenoperations-Einheiten (425) angeschlossen ist, zum Anwenden einer OR-Verknüpfung auf die Ausgangsdaten von den Maskenoperations-Einheiten (425) und zum Ausgeben des Ergebnisses zu dem Speichereingangsbus (292) des Speichers (290); und
einen Zwischenspeicher-Signalgenerator (422), welcher an die Register (423) angeschlossen ist, zum Erzeugen und Ausgeben eines Zwischenspeicher-Zeitsteuerungssignals entsprechend den Multiplex-Format-Daten von der Programmsteuerungseinheit (214),
wodurch ein Zeitmultiplexen, ein Bit-Multiplexen oder ein Multiplexen, welches eine Kombination dieser ist, auf die Daten auf den Ausgangsbussen (251-258) angewendet wird.

5. Steuerungsprozessor nach einem der Ansprüche 1 bis 4, bei welchem die Demultiplexeinheit (213) umfaßt:
Mehrere Register (434), welche an den Speicherausgangsbus (293) des Speichers (290) angeschlossen sind, zum Speichern der Daten auf dem Speicherausgangsbus (293) mit einer diskreten Zwischenspeicher-Zeitsteuerung;
mehrere Verschiebeoperations-Einheiten (433), welche diskret an die Register (434) angeschlossen sind, zum Verschieben der gespeicherten Daten entsprechend den Demultiplex-Format-Daten von der Programmsteuerungseinheit (214);
mehrere Zwischenspeicherschaltungen (432), welche diskret an die Verschiebeoperations-Einheiten (433) angeschlossen sind, zum Angleichen der Ausgangszeitsteuerung der Verschiebeoperations-Einheiten-Ausgangsdaten;
mehrere Ausgangsselektoren (431), welche an die Zwischenspeicherschaltungen (432) angeschlossen sind, um als Ausgangsziel der Zwischenspeicherschaltung (432) den aus den Eingangsbussen (261-268) von Prozessorelementen (221-224, 231-234) selektierten Eingangsbus zu selektieren; und
einen Zwischenspeicher-Signalgenerator (435), welcher an die Register (434) angeschlossen ist, zum Erzeugen und Ausgeben eines Zwischenspeicher-Zeitsteuerungs-Signals entsprechend den Demultiplex-Format-Daten von der Programmsteuerungseinheit (214),
wodurch ein Zeit-Demultiplexen, ein Bit-Demultiplexen oder ein Demultiplexen, welches eine Kombination dieser ist, auf die Daten auf dem Speicherausgangsbus (293) angewendet wird.

## Revendications

1. Processeur de commande inséré entre une pluralité d'éléments de processeur (221 à 224, 231 à 234) ayant chacun un premier bus (261 à 268) et un second bus (251 à 258) et une mémoire (290) comportant un premier bus mémoire (292) et un second bus mémoire (293) pour commander la configuration des bus mémoire, ledit processeur de commande (211) comprenant :
une unité de multiplexage (212) connectée aux seconds bus (251 à 258) de la pluralité des éléments de processeur et au premier bus mémoire (292) de la mémoire et pour convertir les données sur les seconds bus (251 à 258) en données multiplexées par un procédé de multiplexage pour transfert au premier bus mémoire (292) ;
une unité de démultiplexage (213) connectée aux premiers bus (261 à 268) de la pluralité des éléments de processeur et au second bus mémoire (293) de la mémoire (290) et pour convertir les données multiplexées sur le second bus mémoire (293) en données démultiplexées par un procédé de démultiplexage pour transfert aux premiers bus (261 à 268) ; et
une unité de commande de programme (214) connectée à l'unité de multiplexage (212) et à l'unité de démultiplexage (213) et servant à commander le transfert des données de format de multiplexage à l'unité de multiplexage (212) et des données de format de démultiplexage à l'unité de démultiplexage (213) par l'exécution d'un programme de commande ;
caractérisé en ce que
lesdits premiers bus sont des bus d'entrée (261 à 268), lesdits seconds bus sont des bus de sortie (251 à 258), ledit premier bus mémoire est un bus d'entrée mémoire (292) et ledit second bus mémoire est un bus de sortie mémoire (293) ;
une unité de commande d'attribution dynamique (216) est prévue pour générer un signal d'attribution à partir d'une valeur comptée d'un signal de synchronisation et d'un signal d'horloge ; et
ladite unité de commande de programme (214) est une unité de commande de programme avec une attribution dynamique qui est de plus connectée à l'unité de commande d'attribution dynamique (216) pour modifier les données de format de multiplexage transférées à l'unité de multiplexage (212) et les données de format de démultiplexage transférées à l'unité de démultiplexage (213) au moyen du signal d'attribution entré à partir de l'unité de commande d'attribution dynamique (216).

2. Processeur de commande selon la revendication 1, dans lequel l'unité de commande d'attribution dynamique (216) comprend :
un compteur (651) pour compter le signal de synchronisation et le signal d'horloge et pour sortir la valeur comptée ;
un bus de chargement de programme (292) pour entrer le programme en provenance d'une source externe ; et
une mémoire vive (652) connectée au compteur (651) et au bus de chargement de programme (292) pour mémoriser les données entrées à partir du bus de chargement de programme (292) avec un cadencement de synchronisation associé et un cadencement de génération de signal d'attribution dynamique et pour sortir le signal d'attribution dynamique au moyen de la valeur de compte entrée en provenance du compteur (651).

3. Processeur de commande selon la revendication 1, dans lequel l'unité de commande de programme (214) avec une attribution dynamique comprend :
un bus de chargement de programme (292) pour entrer le programme et les données de commande de programme à partir d'une source externe ;
une pluralité de registres d'adresses de début (643) connectés au bus de chargement de programme (292) pour mémoriser les multiples valeurs d'adresse de début entrées comme adresse de début pour exécution de l'ordre ;
un sélecteur d'adresse de début (649) connecté aux multiples registres d'adresses de début (643) et à l'unité de commande d'attribution dynamique (216) pour sélectionner et sortir une valeur d'adresse de début à partir des multiples valeurs d'adresse de début conformément au signal d'attribution ;
une pluralité de registres de pas de boucle (641) connectés au bus de chargement de programme (292) pour mémoriser les multiples nombres de pas de programme entré comme le nombre d'ordres qui doivent être exécutés dans une boucle dans le programme ;
un sélecteur de pas de boucle (648) connecté aux multiples registres de pas de boucle (641) et à l'unité de commande d'attribution dynamique (216) pour sélectionner et sortir un nombre des pas de programme parmi les multiples nombres de pas de programme conformément au signal d'attribution ;
un compteur de boucle (642) connecté au sélecteur de pas de boucle (648) pour compter de manière répétée un signal d'horloge en effaçant la valeur comptée chaque fois que le nombre compté de signaux d'horloge devient le même que le nombre entré de pas de programme, et pour sortir la valeur comptée comme l'adresse de boucle ;
un additionneur d'adresse (644) connecté au sélecteur d'adresse de début (649) et au compteur de boucle (642) pour additionner la valeur d'adresse de début et la valeur d'adresse de boucle et pour sortir le résultat comme l'adresse d'ordre ;
une mémoire vive de programme (645) connectée à l'additionneur d'adresse (644) et au bus de chargement de programme (292) pour mémoriser le programme entré à partir du bus de chargement de programme (292) et extraire les ordres par l'adresse d'ordre provenant de l'additionneur d'adresse (644) ;
un circuit bascule de programme (646) connecté à la mémoire vive de programme (645) pour mémoriser l'ordre sorti ; et
un décodeur (647) connecté au circuit bascule de programme (646) pour décoder les ordres, transférer les données de format de multiplexage à l'unité de multiplexage (212) et transférer les données de format de démultiplexage à l'unité de démultiplexage (213).

4. Processeur de commande selon l'une quelconque des revendications 1 à 3, dans lequel ladite unité de multiplexage (212) comprend :
une pluralité de sélecteurs d'entrée (421) connectés aux bus de sortie (251 à 258) des multiples éléments de processeur (212 à 224, 231 à 234) pour sélectionner des bus de sortie conformément aux données de format de multiplexage provenant de l'unité de commande de programme (214) ;
une pluralité de registres (423) connectés séparément à la pluralité de sélecteurs d'entrée (421) pour mémoriser les données sur le bus de sortie sélectionné à un cadencement de mémorisation séparé ;
une pluralité d'unités d'opération de décalage (424) connectées séparément aux multiples registres (423) pour décaler les données mémorisées conformément aux données de format de multiplexage provenant de l'unité de commande de programme (214) ;
Une pluralité d'unités d'opération de masquage (425) connectées séparément aux multiples unités d'opération de décalage (424) pour masquer les données sorties des unités d'opération de décalage (424) conformément aux données de format de multiplexage provenant de l'unité de commande de programme (214) ;
une unité d'opération OU (426) connectée aux multiples unités d'opération de masquage (425) pour appliquer une opération OU aux données sorties des unités d'opération de masquage (425) et pour sortir le résultat vers le bus d'entrée de mémoire (292) de la mémoire (290) ; et
un générateur de signaux de mémorisation (422) connecté aux multiples registres (423) pour générer et sortir un signal de cadencement de mémorisation conformément aux données de format de multiplexage provenant de l'unité de commande de programme (214),
d'où il résulte qu'un multiplexage par répartition dans le temps, un multiplexage des bits ou un multiplexage qui est une combinaison de ceux-ci est appliqué aux données sur les bus de sortie (251 à 258).

5. Processeur de commande selon l'une quelconque des revendications 1 à 4, dans lequel ladite unité de démultiplexage (213) comprend :
une pluralité de registres (434) connectés au bus de sortie mémoire (293) de la mémoire (290) pour mémoriser les données sur le bus de sortie mémoire (293) à un cadencement de mémorisation séparé ;
une pluralité d'unités d'opération de décalage (433) connectées séparément aux multiples registres (434) pour décaler les données mémorisées conformément aux données de format de démultiplexage en provenance de l'unité de commande de programme (214) ;
une pluralité de circuits bascule (432) connectés séparément aux multiples unités d'opération de décalage (433) pour adapter le cadencement de sortie de l'unité d'opération de décalage aux données sorties ;
une pluralité de sélecteurs de sortie (431) connectés aux multiples circuits bascule (432) pour sélectionner comme la destination de sortie du circuit bascule (432) le bus d'entrée sélectionné à partir des bus d'entrée (261 à 268) des multiples éléments de processeur (221 à 224, 231 à 234) ; et
un générateur de signaux de mémorisation (435) connecté aux multiples registres (434) pour générer et sortir un signal de cadencement de mémorisation conformément aux données de format de démultiplexage provenant de l'unité de commande de programme (214),
d'où il résulte qu'un démultiplexage par répartition dans le temps, un démultiplexage de bits ou un démultiplexage qui est une combinaison de ceux-ci est appliqué aux données sur le bus de sortie mémoire (293).
